# EUROPEAN PATENT APPLICATION

(11) **EP 1 433 683 A1**
(43) Date of publication of application: **30.06.2004**
(21) Application number: 03293341.8
(22) Date of filing: 26.12.2003
(51) Int. Cl.: B60T 13/66

(54) **Dual feedback, high accuracy brake cylinder pressure control**

(30) Priority: 26.12.2002 US 328075
(71) Applicant: Westinghouse Air Brake Technologies Corporation, Wilmerding, PA 15148 (US)
(72) Inventor: Mazur, Richard J., Spartanburg, South Carolina 29650 (US); Wood, James A., Spartanburg, South Carolina 29303 (US)
(74) Representative: Dronne, Guy

(57) **Abstract**

A dual feedback, high accuracy pressure control means (10) for railcar braking systems having an electronic control module (14). A transducer (12) is electronically connected to the control module (14) for transmitting a pressure signal to the control module (14). There is a source of fluid pressure with such source of fluid pressure being at least one of a supply pressure and a regulated supply pressure. At least two solenoid valves have a fluid connection to one another and to the transducer (12) and are electronically connected to the control module (14) for receiving at least one of an apply and hold signal. At least two solenoid valves have a fluid connection to one another and to the transducer (12) and are electronically connected to the control module (14) for receiving at least one of a release and hold signal. A relay valve (26) has a fluid connection to at least two of the solenoid valves and to the transducer (12) and to such source of fluid pressure and to a braking device. At least two of said solenoid valves have a fluid connection to such source of fluid pressure. An exhaust to atmosphere having a fluid connection to at least two of the solenoid valves and to the relay valve (26) is provided.

## Description

### FIELD OF THE INVENTION

The present invention generally relates to pressure control devices. More particularly, the present invention relates to a dual feedback, high accuracy brake cylinder pressure control device for a railcar braking system that uses solenoid valves.

### BACKGROUND OF THE INVENTION

Current braking systems are normally configured in one of two ways, low cycle loop control or high accuracy loop control.

The system described below is covered by U.S. patent 3,398,815 and is manufactured by Westinghouse Air Brake Technologies Corporation and is sold as the RT-5. The teachings of U.S. patent 3,398,815 are incorporated herein by reference thereto.

In a current braking system, a brake pressure demand signal (BPDS) is sent to the electronic controller. The electronic controller reads the control pressure from the electronic signal it receives from the brake cylinder control transducer (BCCT). The BPDS is compared to the BCCT, and if the BPDS is greater than the BCCT by a predetermined amount (i.e., the "control pressure hysteresis band"), the application solenoid and release solenoid are given a command signal that applies pressure to the control volume in a relay valve.

When the control pressure rises to an amount that the BPDS and the BCCT signals are within a predetermined proximity to each other (i.e., the "control pressure hysteresis band"), the application solenoid and release solenoid are given a command signal that stops the application of pressure and holds it at its respective level. If the BPDS is less than the BCCT by a predetermined amount (i.e., the "control pressure hysteresis band"), the application solenoid and release solenoid are given a command signal that releases pressure from the relay valve control volume.

When the brake control pressure falls to an amount that the BPDS and the BCCT signals are within a predetermined proximity to each other (i.e., the "control pressure hysteresis band"), the application solenoid and release solenoid are given a command signal that stops the release of pressure and holds it at its respective level.

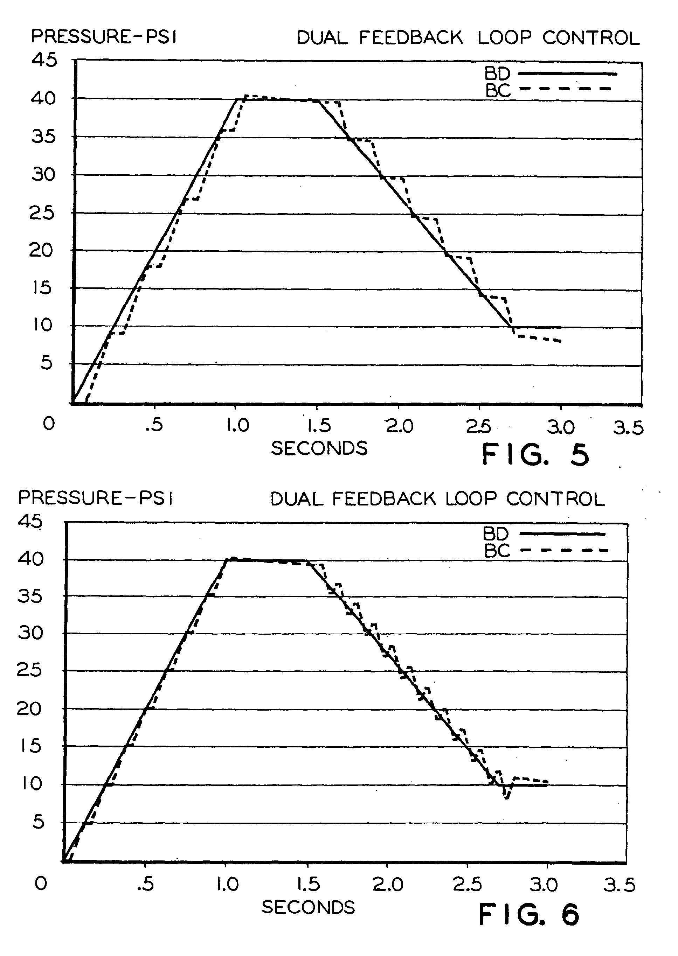

The low cycle loop control uses a wide "control pressure hysteresis band" around the commanded pressure level. This reduces the cycling of the application solenoid and release solenoid during a pressure application, a pressure release, or a pressure maintaining function. This is graphically shown in Figure 5. While this loop will reduce valve cycling, it cannot offer the benefit of high accuracy around a commanded pressure.

The high accuracy loop control uses a tight "control pressure hysteresis band" around the commanded pressure level. Due to the loops attempt to attain high accuracy around a commanded pressure, there are increases in the application solenoid and release solenoid cycling during a pressure application, a pressure release, or a pressure maintaining function. This is graphically shown in Figure 6.

### SUMMARY OF THE INVENTION

In one aspect, such invention generally features a dual feedback, high accuracy pressure control means for railcar braking systems having an electronic control module. A transducer is electronically connected to such control module for transmitting a pressure signal to such control module. There is a source of fluid pressure in which such source of fluid pressure is at least one of a supply pressure and a regulated supply pressure. At least two solenoid valves have a fluid connection to one another and to such transducer and are electronically connected to such control module for receiving at least one of an apply and hold signal. At least two solenoid valves have a fluid connection to one another and to such transducer and are electronically connected to such control module for receiving at least one of a release and hold signal. A relay valve has a fluid connection to at least two of such solenoid valves and to such transducer and to such source of fluid pressure and to a braking device. At least two of the solenoid valves have a fluid connection to such predetermined source of fluid pressure. An exhaust to atmosphere has a fluid connection to at least two of such solenoid valves and to such relay valve.

In another aspect, such invention generally features a method for dual feedback, high accuracy pressure control for railcar braking systems. The method is comprised of the following steps. First, receiving a demand signal in a control module. Then, transmitting a pressure signal electronically from a transducer to the control module and reading the pressure signal electronically transmitted from the transducer to the control module. Next, the control module compares the demand signal to the pressure signal. The control module then gives a command signal to at least one of a plurality of solenoid valves that allows a source pressure to be at least one of applied to, exhausted from and held stable at the relay valve based on the demand signal reading.

### OBJECTS OF THE INVENTION

It is, therefore, one of the primary objects of the present invention to provide a dual feedback, high accuracy brake cylinder pressure control which reduces the valve cycling of a device for pressure control.

Another object of the present invention is to provide a dual feedback, high accuracy brake cylinder pressure control which increases the accuracy of the device for pressure control.

A further object of the present invention is to provide a dual feedback, high accuracy brake cylinder pressure control in which greater overall system reliability is brought about by reduced magnet valve cycles.

Still yet another object of the present invention is to provide a dual feedback, high accuracy brake cylinder pressure control which will reduce costs by reducing needed maintenance and repairs of systems utilizing the invention.

In addition to the above-described objects and advantages of the dual feedback, high accuracy brake cylinder pressure control, various other objects and advantages of the present invention will become more readily apparent to the persons who are skilled in the same and related arts from the following more detailed description of the invention, particularly, when such description is taken in conjunction with the attached drawing figures and the appended claims.

### DESCRIPTION OF THE DRAWING

The present invention will now be described by way of a particular preferred embodiment, reference being had to the accompanying drawing, wherein:

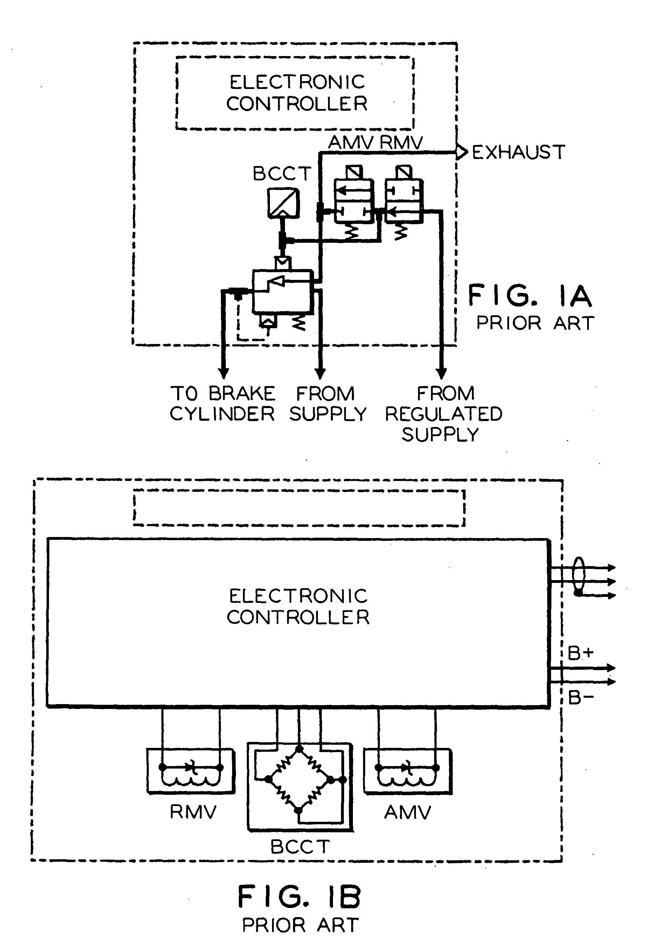

Figure 1a is a piping drawing and figure 1b is an electrical schematic of a prior art for electronic control of a brake cylinder pressure.
Figure 2a is a piping drawing and figure 2b is an electrical schematic of the preferred embodiment of the current invention for electronic control of a brake cylinder pressure.

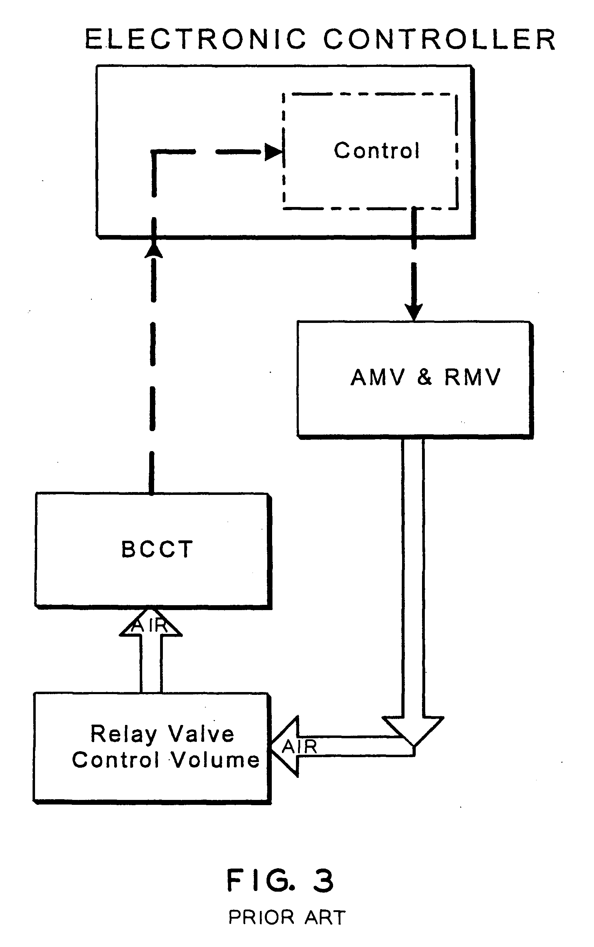

Figure 3 is a flow chart of a prior art approach for electronic Control of a brake cylinder pressure related to Figures 1a and 1b.

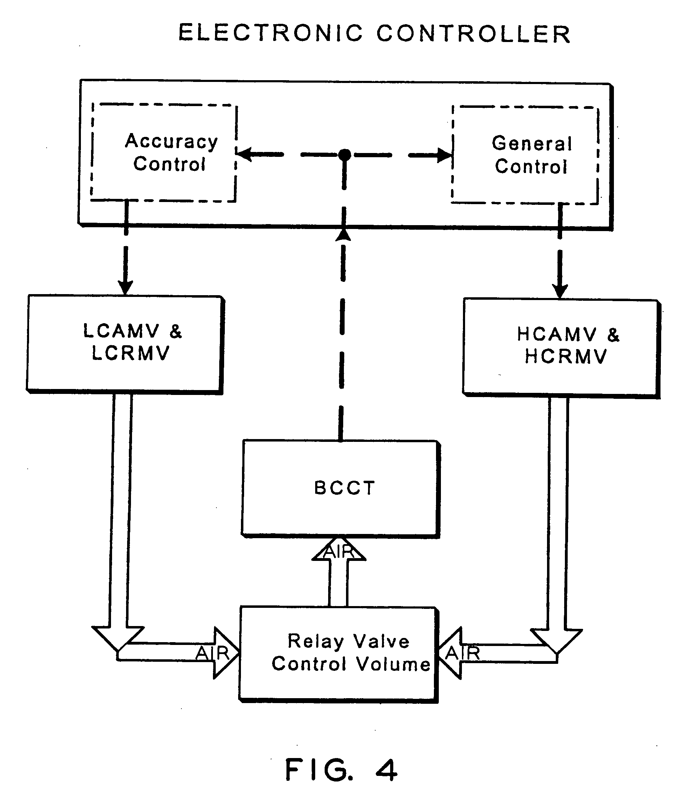

Figure 4 is a flow chart of the presently preferred embodiment of the current invention for electronic control of a brake cylinder pressure related to Figure 3.
Figure 5 is a graph showing the results of a computer simulation of the pressure application and release of a low cycle loop that is calibrated to efficiently make large pressure adjustments with minimal valve cycling, while accuracy is allowed to deteriorate.
Figure 6 is a graph of a computer simulation of pressure application and release of a high accuracy loop that is calibrated to efficiently make small pressure adjustments without allowing the accuracy to deteriorate, while valve cycling increases.
Figure 7 is a graph of a computer simulation of pressure application and release chart of the presently preferred embodiment of the current invention showing minimal valve cycling and a high degree of accuracy.

### DETAILED DESCRIPTION OF THE PREFERRED EMBODIMENT

Prior to proceeding to a much more detailed description of the present invention, it should be noted that identical components which have identical" functions have been identified with identical reference numerals throughout the several views illustrated in the drawing figures for the sake of clarity and understanding of the invention.

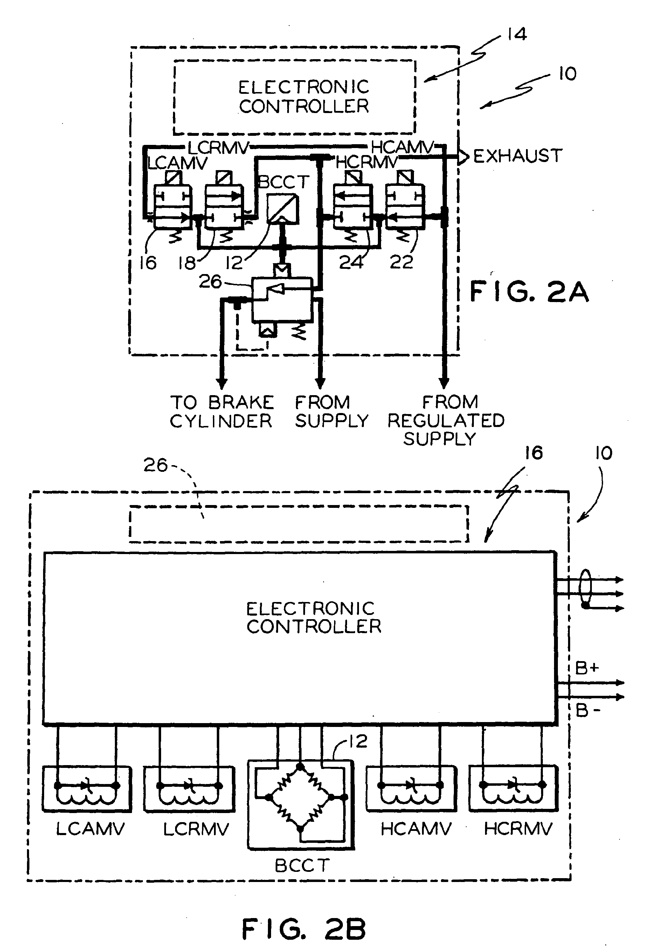

Referring initially to Figures 2a and 2b a dual feedback, high accuracy brake cylinder pressure control constructed according to the present invention is generally indicated by reference numeral 10. The dual feedback, high accuracy brake cylinder pressure control 10 includes a brake cylinder control transducer (BCCT) 12 electrically connected to an electronic control module 14. A low capacity application solenoid valve (LCASV) 16, a low capacity release solenoid valve (LCRSV) 18 are connected for fluid communication with a relay valve 26 and are electrically connected to the electronic control module 14. Additionally, a high capacity release solenoid valve 24 (HCRSV) and a high capacity application solenoid valve 22 (HCASV) are connected for fluid communication with a relay valve 26 and are electrically connected to the electronic control module 14.

In the presently preferred embodiment of the invention, a brake pressure demand signal (BPDS) is sent to the electronic control module 14. The electronic control module 14 reads the brake control pressure from the electronic signal it receives from the BCCT 12. The BPDS reading is compared to the BCCT 12 reading. If the BPDS reading is greater than the BCCT 12 reading by a predetermined amount (i.e., the "control pressure hysteresis band") the LCASV 16, LCRSV 18, HCASV 22, and HCRSV 24 are given a command signal that allows a supply pressure to be applied to the control volume in the relay valve 26.

When the brake control pressure rises to a level such that the BPDS reading and the BCCT 12 reading are within a predetermined proximity to each other (i.e., the "control pressure hysteresis band"), the LCASV 16, LCRSV 18, HCASV 22, and HCRSV 24 are given a command signal that stops the application of supply pressure to the control volume of the relay valve 26 and holds it at its respective level.

If the BPDS reading is less than the BCCT 12 reading by a predetermined amount (i.e., the "control pressure hysteresis band"), the LCASV 16, LCRSV 18, HCASV 22, and HCRSV 24 are given a command signal that allows pressure to be exhausted from the control volume of the relay valve 26.

When the control volume pressure falls to an amount that the BPDS and the BCCT signals are within a predetermined proximity to each other, the application and release magnet valves are given a command signal that stops the release of pressure from the control volume and holds it at its respective level.

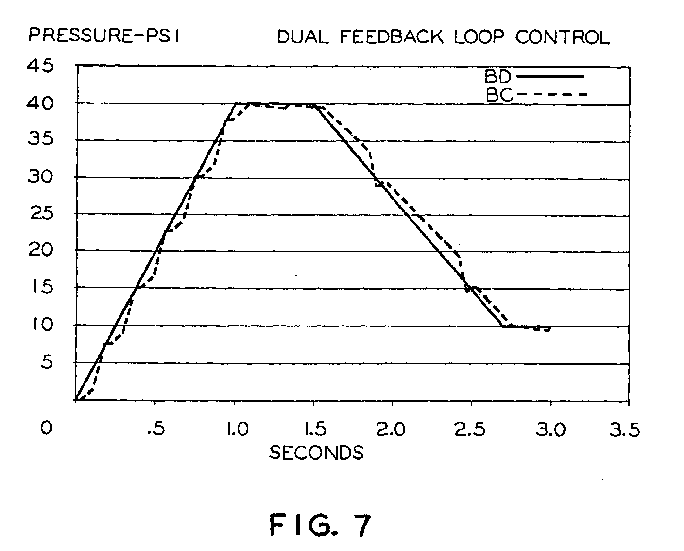

The dual feedback loop control is specifically configured to reduce valve cycling and increase accuracy. When compared to current prior art devices from a hardware standpoint, it uses an additional application and release valve and their associated drivers to create two feedback loops with a common electronic control module 14 and brake cylinder control transducer 12. Although these loops use common components, they operate independently from a logic standpoint. Essentially a standard high accuracy loop and a standard low cycle loop are run in parallel on the same control volume of the relay valve 26 using the same BCCT 12 and electronic control module 14. One loop is configured for high accuracy with low capacity application and release magnet valves and a tight hysteresis band. The other loop is configured low cycles with high capacity application and release magnet valves and a loose hysteresis band. Figure 7 illustrates the operation of this approach.

For the purposes of explanation of this invention, an example of a brake cylinder pressure control system as used for a truck (or bogie) of a subway car will be presented. It should be noted that this is in no way meant to be a limit to the possible uses for this invention. The following is a list of the parameters used in all of the simulation examples presented:
Pressure Build-Up Request - 40 psi/Sec
Pressure Release Request - 25 psi/Sec
Pressure Application Level - from 0 to 40 psi
Hold @ 40 psi - 0.5 secmds
Pressure Release - from 40 to 10 psi

### Low Cycle Loop Control

Summing Point = Pressure Request - BCCT Reading
Magnet Valve Lead Time - 7 milliseconds
Application/Lap Band - +2.4 psi & +0.7 psi
Release/Lap Band - -2.4 psi & -0.7 psi
Application Choke - 60 psi/Sec
Release Choke - 80 psi/Sec
Control Pressure Accuracy Range - ± 2.4 psi

### High Accuracy Loop Control

Summing Point = Pressure Request -BCCT Reading
Magnet Valve Lead Time - 7 milliseconds
Application/Lap Band - +0.7 psi & +0.3 psi
Release/Lap Band - -1.3 psi & -0.3 psi
Application Choke -60 psi/Sec
Release Choke -80 psi/Sec
Control Pressure Accuracy Range -+0.7 -I .3 psi

### Dual Feedback Loop Control

Summing Point = Pressure Request -BCCT Reading
Magnet Valve Lead Time - 7 milliseconds
High Flow Application/Lap Band - +2.4 Psi & +0.7 Psi
Low Flow Application/Lap Point - +0.5 Psi
High Flow Release/Lap Band - -2.4 Psi & -0.7 Psi
Low Flow Release/Lap Point - -0.5 Psi
High Flow Application Choke - 60 Psi/Sec
Low Flow Application Choke - 20 Psi/Sec
High Flow Release Choke - 80 Psi/Sec
Low Flow Release Choke - 20 Psi/Sec
Control Pressure Accuracy Range +0.5 -0.5 Psi

By comparison the dual feedback loop control takes all of the best characteristics of the standard low cycle loop control and the high accuracy loop control with none of the drawbacks. By comparing Figure 5, Figure 6, and Figure 7, it can be seen that the dual feedback loop control reduces the number of cycles per magnet valve below that of either the low cycle or high accuracy approach alone. It can also be seen that the dual feedback loop control adds a tighter accuracy tolerance than either the low cycle or high accuracy approach alone.

Additionally the dual feedback loop control has greater inherent system stability (i.e., it is less likely to oscillate like the high accuracy loop does). The accuracy of the standard low cycle loop control simulation is ± 2.4 psi, the standard high accuracy loop control simulation is +0.7 -1.3 psi, while the dual feedback loop control simulation is ± 0.5 psi.

While the present invention has been described by way of a detailed description of a particularly preferred embodiment, it will be readily apparent to those of ordinary skill in the art that various substitutions of equivalents may be affected without departing from the spirit or scope of the inventions set forth in the appended claims.

## Claims

1. A dual feedback, high accuracy pressure control means (10) for railcar braking systems, said pressure control means being **characterized in that** they comprise:
(a) an electronic control module (14);
(b) a transducer (12) electronically connected to said control module (14) for transmitting a pressure signal to said control module (14);
(c) a source of fluid pressure, said source of fluid pressure being at least one of a supply pressure and a regulated supply pressure;
(d) at least two solenoid valves (16, 22) having a fluid connection to one another and to said transducer (12) and electronically connected to said control module (14) for receiving at least one of an apply and hold signal;
(e) at least two solenoid (18, 24) valves having a fluid connection to one another and to said transducer (12) and electronically connected to said control module (14) for receiving at least one of a release and hold signal;
(f) a relay valve (26) having a fluid connection to at least two of said solenoid valves and to said transducer (12) and to said source of fluid pressure and to a braking device;
(g) at least two of said solenoid valves having a fluid connection to said source of fluid pressure; and
(h) an exhaust to atmosphere having a fluid connection to at least two of said solenoid valves and to said relay valve (26).

2. A dual feedback, high accuracy pressure control means (10) for railcar braking systems according to claim 1, wherein at least one of said solenoid valves (16, 18) is of the low capacity, normally open type.

3. A dual feedback, high accuracy pressure control means (10) for railcar braking systems according to claim 1 or 2, wherein at least one of said solenoid valves (16, 18) is of the low capacity, normally closed type.

4. A dual feedback, high accuracy pressure control means (10) for railcar braking systems according to any one of claims 1 to 3, wherein at least one of said solenoid valves (22, 24) is of the high capacity, normally open type.

5. A dual feedback, high accuracy pressure control means (10) for railcar braking systems according to any one of claims 1 to 4, wherein at least one of said solenoid valves (22, 24) is of the high capacity, normally closed type.

6. A dual feedback, high accuracy pressure control means (10) for railcar braking systems according to any one of claims 1 to 5, wherein said transducer (12) is of the analog type.

7. A dual feedback, high accuracy pressure control means (10) for railcar braking systems according to any one of claims 1 to 6, wherein said control module (14) monitors at least two feedback loops using said transducer (12).

8. A dual feedback, high accuracy pressure control means (10) for railcar braking systems according to claim 7, wherein said feedback loops operate independently from a logic standpoint.

9. A dual feedback, high accuracy pressure control means (10) for railcar braking systems according to claim 7 or 8, wherein said control module (14) runs a predetermined high accuracy loop and a predetermined low cycle loop in parallel using said relay valve (26) and said transducer (12).

10. A dual feedback, high accuracy pressure control means (10) for railcar braking systems according to any one of claims 7 to 9, wherein one of said feedback loops is configured for high accuracy with low capacity solenoid valves and a tight hysteresis band.

11. A dual feedback, high accuracy pressure control means (10) for railcar braking systems according to any one of claims 7 to 10, wherein one of said feedback loops is configured for low solenoid valve cycling with high capacity solenoid valves (22, 24) and a loose hysteresis band.

12. A method for dual feedback, high accuracy pressure control for railcar braking systems, said method being **characterized in that** it comprises the steps of:
(a) receiving a demand signal in a control module (14);
(b) transmitting a pressure signal electronically from a transducer (12) to said control module (14);
(c) reading a pressure signal electronically transmitted from said transducer (12) to said control module (14);
(d) comparing said demand signal to said pressure signal;
(e) giving a command signal to at least one of a plurality of solenoid valves (16, 18, 22, 24) that allows a source pressure to be at least one of applied to, exhausted from and held stable at the relay valve (26) based on the demand signal reading.

13. A method for dual feedback, high accuracy pressure control for railcar braking systems according to claim 12, wherein said giving said command signal in step (e) to at least one of said plurality of solenoid valves (16, 18, 22, 24) stops said source pressure from being applied to said relay valve (26) and holds it stable when said pressure signal rises to an amount wherein said demand signal and said pressure signal are within a predetermined proximity to each other.

14. A method for dual feedback, high accuracy pressure control for railcar braking systems according to claim 12 or 13, wherein said giving said command signal in step (e) to at least one of said plurality of solenoid valves (16, 18, 22, 24) stops said source pressure from being exhausted from said relay valve (26) and holds it stable when said pressure signal falls to an amount wherein said demand signal and said pressure signal are within a predetermined proximity to each other.

15. A method for dual feedback, high accuracy pressure control for railcar braking systems according to any one of claims 12 to 14, wherein said giving said command signal in step (e) to at least one of said plurality of solenoid valves (16, 18, 22, 24) applies said source pressure to said relay valve (26) when said demand signal is greater than said pressure signal by a predetermined amount.

16. A method for dual feedback, high accuracy pressure control for railcar braking systems according to any one of claims 12 to 15, wherein said giving said command signal in step (e) to at least one of said plurality of solenoid valves allows pressure to be exhausted from said relay valve (26) if said demand signal is less than said pressure signal by a predetermined amount.
